(19) **Europäisches Patentamt / European Patent Office / Office européen des brevets**

(11) **EP 2 030 039 B1**

(12) **FASCICULE DE BREVET EUROPEEN**

(45) Date de publication et mention
de la délivrance du brevet:
**05.08.2009 Bulletin 2009/32**

(21) Numéro de dépôt: **07765471.3**

(22) Date de dépôt: **18.06.2007**

(51) Int Cl.:
**G01S 5/14** $^{(2006.01)}$

(86) Numéro de dépôt international:
**PCT/EP2007/056030**

(87) Numéro de publication internationale:
**WO 2007/147807 (27.12.2007 Gazette 2007/52)**

(54) **PROCEDE DE RECEPTION ET RECEPTEUR POUR UN SIGNAL DE RADIONAVIGATION MODULE PAR UNE FORME D'ONDE D'ETALEMENT CBOC**

EMPFANGSVERFAHREN UND EMPFÄNGER FÜR EIN MITTELS CBOC-AUSGEBREITETER WELLENFORM MODULIERTES FUNKNAVIGATIONSSIGNAL

METHOD OF RECEPTION AND RECEIVER FOR A RADIO NAVIGATION SIGNAL MODULATED BY A CBOC SPREAD WAVE FORM

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.06.2006 FR 0605551**
**17.08.2006 FR 0653386**

(43) Date de publication de la demande:
**04.03.2009 Bulletin 2009/10**

(73) Titulaire: **Centre National d'Etudes Spatiales**
**75039 Paris Cedex 01 (FR)**

(72) Inventeurs:
- **RIES, Lionel**
  **31400 Toulouse (FR)**
- **ISSLER, Jean-Luc**
  **31000 Toulouse (FR)**
- **JULIEN, Olivier**
  **31400 Toulouse (FR)**
- **MACABIAU, Christophe**
  **82000 Montauban (FR)**

(74) Mandataire: **Office Freylinger**
**P.O. Box 48**
**8001 Strassen (LU)**

(56) Documents cités:
- **HEIN G W ET AL: "MBOC: The New Optimized Spreading Modulation Recommended for GALILEO L1 OS and GPS L1C" POSITION, LOCATION, AND NAVIGATION SYMPOSIUM, 2006 IEEE/ION CORONADO, CA APRIL 25-27, 2006, PISCATAWAY, NJ, USA,IEEE, 25 avril 2006 (2006-04-25), pages 883-892, XP010925014 ISBN: 0-7803-9454-2 cité dans la demande**
- **AVILA-RODRIGUEZ ET AL: "CBOC ? An Implementation of MBOC" FIRST CNES WORKSHOP ON GALILEO SIGNALS AND SIGNAL PROCESSING, 12-13 OCTOBER 2006, IAS ( INSTITUT AERO SPATIAL ) TOULOUSE, FRANCE, [Online] 12 octobre 2006 (2006-10-12), XP002420830 Extrait de l'Internet: URL: forschung.unibw.de> [extrait le 2007-02-19]**

Printed by Jouve, 75001 PARIS (FR)

## Description

### Domaine technique

La présente invention concerne un procédé de réception, respectivement un récepteur pour un signal de radionavigation modulé par une forme d'onde d'étalement CBOC.

### Etat de la technique

Les systèmes de positionnement par satellite comme GPS (Global Positioning System), Galileo, GLONASS, QZSS et autres utilisent des signaux de navigation modulés appelés « en spectre étalé ». Ces signaux véhiculent essentiellement des codes pseudo-aléatoires formés de séquences numériques se répétant périodiquement, dont la fonction principale est de permettre un Accès Multiple à Répartition de Code (AMRC) et la fourniture d'une mesure précise du temps de propagation du signal émis par le satellite. Accessoirement, les signaux de positionnement par satellites peuvent aussi transporter des données utiles.

Dans le cas de GPS, les signaux de navigation sont transmis dans les bandes de fréquences L1, centrée sur 1575,42 MHz et L2, centrée sur 1227,6 MHz. Au cours de la modernisation de GPS, la bande L5, centrée sur 1176,45 MHz sera ajoutée. Les satellites de la constellation Galileo transmettront dans la bandes E2-L1-E1 (la portion de bande médiane L1 étant la même que celle du GPS), E5a (qui, selon la nomenclature Galileo, représente la bande L5 prévue pour le GPS), E5b (centrée sur 1207,14 MHz) et E6 (centrée sur 1278,75 MHz).

Les signaux de navigation sont formés par modulation des fréquences centrales (porteuses). Différents schémas de modulation sont déjà implantés pour réaliser les signaux de navigation ou du moins envisagés. Pour assurer l'interopérabilité et la compatibilité entre les systèmes GPS et Galileo, les Etats-Unis d'Amérique et l'Union Européenne se sont mis d'accord sur certains points concernant les schémas de modulation des signaux dans la bande L1, utilisée par les deux systèmes. Plus de détails sur les schémas de modulation proposés peuvent être tirés de la publication « MBOC : The New Optimized Spreading Modulation Recommended for GALILEO L1 OS and GPS L1C », Hein et al., InsideGNSS, mai/juin 2006, pp. 57-65.

L'un des schémas de modulation retenu comme candidat pour la modulation du signal Galileo OS L1 est connu sous la désignation « modulation CBOC » (de « Composite Binary Offset Carrier »). La forme d'onde d'étalement CBOC modulant la porteuse est une combinaison linéaire d'une forme d'onde BOC(1,1) et d'une deuxième forme d'onde BOC(m,1). BOC est l'abréviation de « Binary Offset Carrier ». De manière générale, BOC(n,m) est une fonction du temps t définie par :

$$BOC(n,m)(t) = C_m(t) \cdot sign\big[\sin\big(2\pi f_{sc} t\big)\big],$$

où $C_m(t)$ est un code pseudo-aléatoire à rythme de bribes (chip rate) m $\times$ 1,023 Mcps prenant les valeurs +1 ou -1 et $f_{sc}$ la fréquence n $\times$ 1,023 MHz. Une condition sur n et m est que le rapport 2n/m soit entier. Dans le cas du service ouvert OS (Open Service) de Galileo, le rythme de bribes est fixé à 1,023 Mcps (méga-chips per second). Une forme d'onde CBOC peut s'écrire, dans ce cas :

$$CBOC(n_1,1)(t) = V \cdot BOC(1,1)(t) + W \cdot BOC(n_1,1)(t),$$

où V et W sont des coefficients réels définissant la pondération relative des composantes BOC(1,1) et BOC(m,1). Dans le cas d'une forme d'onde CBOC, les deux composantes BOC portent le même code pseudo-aléatoire.

Une forme d'onde CBOC peut être considérée comme membre particulier d'une famille de formes d'onde composites décrite, par exemple dans la demande de brevet européenne 05 290 083.4. Le même document décrit également des procédés de réception d'un signal modulé par une forme d'onde composite. Selon le premier procédé décrit, on opère la corrélation du signal entrant modulé par une forme d'onde CBOC et d'une réplique locale de cette forme d'onde CBOC. Cette solution implique, au niveau du récepteur, la génération d'une réplique CBOC. Il est donc nécessaire d'implémenter une quantification à quatre niveaux à l'entrée du corrélateur, ce qui nécessite au moins une architecture à 2 bits. Selon le deuxième procédé décrit, on opère les corrélations entre le signal entrant et une réplique locale de la première composante BOC, respectivement entre le signal entrant et une réplique locale de la deuxième composante BOC. Ensuite, les résultats des deux corrélations sont combinés. Dans cette solution, les répliques locales sont à un bit ce qui peut être considéré comme avantageux par rapport à la première solution. Le prix à payer est un nombre d'opérations de corrélation doublé vis-à-vis de la première solution, toutes choses égales par ailleurs

**Objet de l'invention**

Un objectif de la présente invention est de proposer un nouveau procédé de réception d'un signal de radionavigation modulé par une forme d'onde d'étalement composite.
Cet objectif est atteint par un procédé selon la revendication 1.

**Description générale de l'invention**

Pour recevoir un signal de radionavigation modulé par une forme d'onde composite, la forme d'onde composite comprenant une combinaison linéaire à coefficients réels d'une composante $BOC(n_1,m)$ et d'une composante $BOC(n_2,m)$, $n_1$ étant distinct de $n_2$, il est proposé d'opérer une corrélation entre une forme d'onde locale et la forme d'onde composite sur un intervalle de temps de durée T. Selon un aspect important de l'invention, la forme d'onde locale est une forme d'onde binaire, formée sur ledit intervalle de temps d'une succession alternante comprenant au moins un segment de forme d'onde $BOC(n_1,m)$ et au moins un segment de forme d'onde $BOC(n_2,m)$, l'au moins un segment $BOC(n_1,m)$ ayant une durée totale de $\alpha T$, $\alpha$ étant strictement compris entre 0 et 1, l'au moins un segment $BOC(n_2,m)$ ayant une durée totale $(1-\alpha)T$. Contrairement aux procédés de réception discutés plus haut, le procédé selon l'invention n'implique pas de forme d'onde à plus de deux niveaux et ne nécessite pas un nombre plus élevé de corrélateurs.
Dans un mode de réalisation préféré de l'invention, les composantes $BOC(n_1,m)$ et $BOC(n_2,m)$ portent un même code pseudo-aléatoire et la forme d'onde locale porte au moins une partie prédéterminée de ce code pseudo-aléatoire. Les codes pseudo-aléatoires utilisés dans la radionavigation par satellites sont soit des codes entièrement prédéterminés (dans le cas d'une voie pilote), soit des codes comprenant une partie prédéterminée et une partie « données » (dans le cas d'une voie de données). La partie « données » est transmise à un rythme de symboles nettement inférieur au rythme de bribes de la partie prédéterminée.
Au cas où $n_2=1$ et $m=1$, la combinaison linéaire est une forme d'onde $CBOC(n_1,1)$ définie par :

$$CBOC(n_1,1) = V \cdot BOC(1,1) + W \cdot BOC(n_1,1),$$

où V et W sont des coefficients réels de pondération. En ce qui concerne le candidat CBOC pour le futur signal Galileo OS L1, il a été en plus convenu que $n_1=6$. Dans certains cas, il pourrait s'avérer avantageux, pour la réception d'un signal $CBOC(n_1,1)$, que $\alpha$ soit au moins approximativement égal à la valeur de référence $W/(V+W)$. Dans d'autres cas, $\alpha$ inférieur ou supérieur à cette valeur de référence pourrait être plus approprié.
La forme d'onde locale peut comprendre une succession alternante comprenant un unique segment de forme d'onde $BOC(n_1,m)$ et un unique segment de forme d'onde $BOC(n_2,m)$. Dans un autre mode de réalisation de l'invention, la succession alternante comprend une pluralité de segments de forme d'onde $BOC(n_1,m)$ d'une durée totale $\alpha T$ et/ou une pluralité de segments de forme d'onde $BOC(n_2,m)$ d'une durée totale $(1-\alpha)T$.
Pour mettre en oeuvre le procédé selon l'invention, il est proposé un récepteur adapté pour recevoir un signal de radionavigation modulé par une forme d'onde composite, la forme d'onde composite comprenant une combinaison linéaire à coefficients réels d'une composante $BOC(n_1,m)$ et d'une composante $BOC(n_2,m)$, $n_1$ étant distinct de $n_2$, le récepteur comprenant un ensemble de générateurs de forme d'onde locale et de corrélateurs pour opérer la corrélation entre la forme d'onde locale et ladite forme d'onde composite sur un intervalle de temps de durée T. Les générateurs de forme d'onde locale sont notamment configurés pour générer une forme d'onde locale binaire, formée sur ledit intervalle de temps d'une succession alternante comprenant au moins un segment de forme d'onde $BOC(n_1,m)$ et au moins un segment de forme d'onde $BOC(n_2,m)$, l'au moins un segment $BOC(n_1,m)$ ayant une durée totale de $\alpha T$, $\alpha$ étant strictement compris entre 0 et 1, l'au moins un segment $BOC(n_2,m)$ ayant une durée totale $(1-\alpha)T$.
Selon un mode de réalisation préféré, le récepteur comprend une unité de commande agissant sur les générateurs de forme d'onde locale de manière à influencer (a) l'ordre temporel du ou des segments $BOC(n_1,m)$ et du ou des segments $BOC(n_2,m)$ et/ou (b) la durée du ou des segments $BOC(n_1,m)$ et du ou des segments $BOC(n_2,m)$. Ce mode de réalisation est particulièrement avantageux pour un récepteur adaptés aux futurs signaux Galileo OS L1 et GPS L1C. En effet, la modulation prévue pour ce dernier signal est une modulation BOC multiplexée dans le temps (TMBOC, Time-Multiplexed BOC) ayant une composant $BOC(1,1)$ et une composante $BOC(6,1)$. Si la modulation retenue pour Galileo OS L1 est une modulation $CBOC(6,1)$, alors il sera possible de recevoir les deux signaux par le même récepteur. En jouant sur l'ordre temporel des segments $BOC(1,1)$ et $BOC(6,1)$ et/ou sur leur durée, l'unité de commande peut optimiser la forme d'onde locale pour la réception soit du TMBOC de GPS, soit du CBOC de Galileo.

**Brève description des dessins**

Un mode de réalisation préféré de l'invention sera décrit ci-après, à titre d'exemple non limitatif, avec référence aux dessins annexés, dans lesquels

Fig. 1: est une représentation temporelle d'une forme d'onde CBOC(6,1) ;

Fig. 2: est une représentation d'une corrélation entre une forme d'onde BOC(1,1) et une forme d'onde BOC(6,1) ;

Fig. 3: est une représentation d'autocorrélations de deux formes d'onde CBOC(6,1) ayant des facteurs de pondération différents ;

Fig. 4: est une représentation temporelle d'une forme d'onde binaire locale pouvant être utilisée dans un procédé selon l'invention;

Fig. 5 : montre une comparaison entre la fonction d'autocorrélation d'un CBOC(6,1,1/11) et la fonction de corrélation entre un CBOC(6,1,1/11) et une forme d'onde locale binaire comme illustrée à la figure 4 ;

Fig. 6 : montre différentes fonctions de corrélation entre un CBOC(6,1,2/11) et une forme d'onde locale binaire ;

Fig. 7 : est une représentation de la dégradation du rapport $C/N_0$ en fonction du paramètre $\alpha$, dans les cas des CBOC(6,1,1/11) et CBOC(6,1,2/11) ;

Fig. 8 : montre une comparaison de l'enveloppe d'erreurs due aux multi-trajet dans le cas où la forme d'onde locale est une forme d'onde composite CBOC(6,1) et de l'enveloppe d'erreurs due aux multi-trajet dans le cas où la forme d'onde locale est une forme d'onde binaire comme illustrée à la figure 4 ;

Fig. 9 : est un schéma d'un récepteur adapté à la réception d'un signal composite.

**Description d'une exécution préférée**

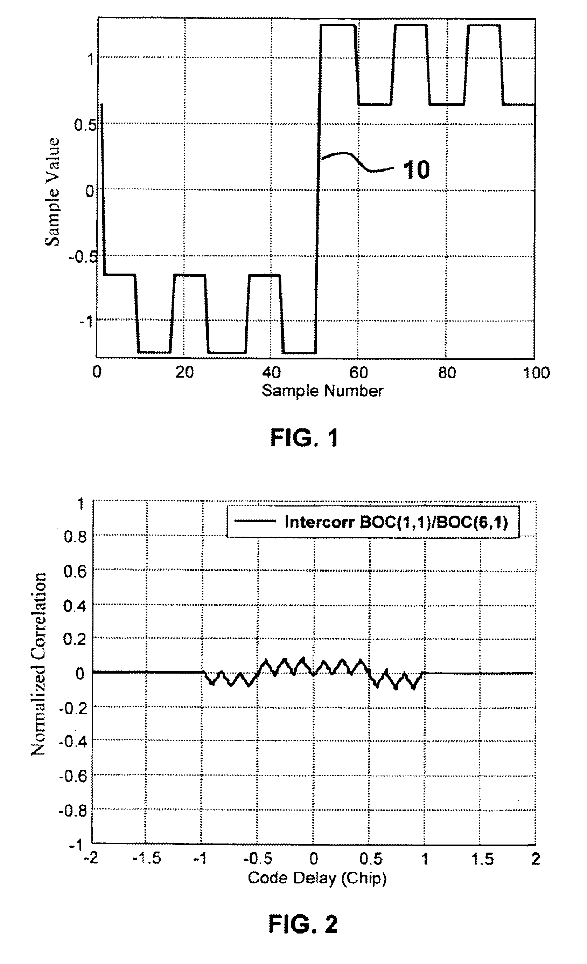

La figure 1 montre une forme d'onde CBOC(6,1) **10,** définie par :

$$CBOC(6,1)(t) = V \cdot BOC(1,1)(t) - W \cdot BOC(6,1)(t)$$

où V et W sont les facteurs de pondération. Nous utiliserons dans la suite les notations suivantes :

$$BOC(1,1)(t) = C_P(t) \cdot x(t)$$

et

$$BOC(6,1)(t) = C_P(t) \cdot y(t),$$

où $C_P(t)$ représente le code pseudo-aléatoire commun aux deux composantes.

Pour le signal Galileo OS L1, on envisage différentes valeurs de V et de W, qui dépendent du schéma de multiplexage de ce signal. On trouvera plus de détails dans l'article de Hein et al. dans InsideGNSS, dont la référence complète est indiquée dans l'introduction.

Pour introduire certaines notations et mieux expliquer les avantages de l'invention, nous discuterons dans la suite une méthode de poursuite du signal CBOC **10** dont le principe a été décrit dans la demande de brevet européenne 05 290 083.4. Dans cette méthode, il y a deux corrélations à effectuer en parallèle: une avec une réplique locale BOC(1,1) et une avec une réplique locale BOC(6,1). Les répliques locales sont les suivantes

$$s_{I1}(t) = C_P(t)x(t)\cos(2\pi f_0 t + \hat{\phi}),$$

$$s_{Q1}(t) = C_P(t)x(t)\sin(2\pi f_0 t + \hat{\phi}),$$

$$s_{I2}(t) = C_P(t)y(t)\cos(2\pi f_0 t + \hat{\phi}),$$

$$s_{Q2}(t) = C_P(t)y(t)\sin(2\pi f_0 t + \hat{\phi}),$$

où les indices I et Q marquent les composantes « en phase » et « en quadrature de phase » des répliques locales, $f_0$ est la fréquence de la porteuse et $\hat{\phi}$ une phase.

Comme corrélation du signal CBOC avec $S_{I1}$, on obtient :

$$I_1 = \int_0^T s_{I1}(t - \hat{\tau})CBOC(t - \tau)dt,$$

$$I_1 = \int_0^T C_P(t - \hat{\tau})x(t - \hat{\tau})\cos(2\pi f_0 t + \hat{\phi})C_P(t - \tau)\{V x(t - \tau) - W y(t - \tau)\}\cos(2\pi f_0 t + \phi)dt,$$

$$I_1 = \left(VR_{BOC(1,1)}(\varepsilon_\tau) - WR_{BOC(1,1)/BOC(6,1)}(\varepsilon_\tau)\right)\cos(\varepsilon_\phi),$$

où $\hat{\tau}$ est la phase du code pseudo-aléatoire du signal réplique local, estimée de la phase $\tau$ du code pseudo-aléatoire du signal reçu, $\hat{\phi}$ la phase de la porteuse du signal réplique local, estimée de la phase $\phi$ de la phase de la porteuse du signal reçu, T la durée de l'intervalle d'intégration, $R_{BOC(1,1)}$ la fonction d'autocorrélation d'une forme d'onde BOC(1,1), $R_{BOC(1,1)/BOC(6,1)}$ la fonction de corrélation entre une forme d'onde BOC(1,1) et une forme d'onde BOC(6,1), $\varepsilon_\tau = \hat{\tau}$-$\tau$ et $\varepsilon_\phi = \hat{\phi}$-$\phi$.

De la même façon, nous pouvons écrire :

$$Q_1 = \left(VR_{BOC(1,1)}(\varepsilon_\tau) - WR_{BOC(1,1)/BOC(6,1)}(\varepsilon_\tau)\right)\sin(\varepsilon_\phi),$$

$$I_2 = \left(VR_{BOC(1,1)/BOC(6,1)}(\varepsilon_\tau) - WR_{BOC(6,1)}(\varepsilon_\tau)\right)\cos(\varepsilon_\phi),$$

$$Q_2 = \left(VR_{BOC(1,1)/BOC(6,1)}(\varepsilon_\tau) - WR_{BOC(6,1)}(\varepsilon_\tau)\right)\sin(\varepsilon_\phi),$$

où $R_{BOC(6,1)}$ est l'autocorrélation d'une forme d'onde BOC(6,1).

En recombinant les corrélations et en utilisant le fait que la corrélation entre une forme d'onde BOC(1,1) et une forme d'onde BOC(6,1) est symétrique comme montré à la figure 2, on retrouve la fonction d'autocorrélation d'une forme d'onde CBOC :

$$I = VI_1 - WI_2 = \left( V^2 R_{BOC(1,1)}(\varepsilon_\tau) + W^2 R_{BOC(6,1)}(\varepsilon_\tau) - 2VW R_{BOC(1,1)/BOC(6,1)}(\varepsilon_\tau) \right) \cos(\varepsilon_\phi)$$

et

$$Q = VQ_1 - WQ_2 = \left( V^2 R_{BOC(1,1)}(\varepsilon_\tau) + W^2 R_{BOC(6,1)}(\varepsilon_\tau) - 2VW R_{BOC(1,1)/BOC(6,1)}(\varepsilon_\tau) \right) \sin(\varepsilon_\phi).$$

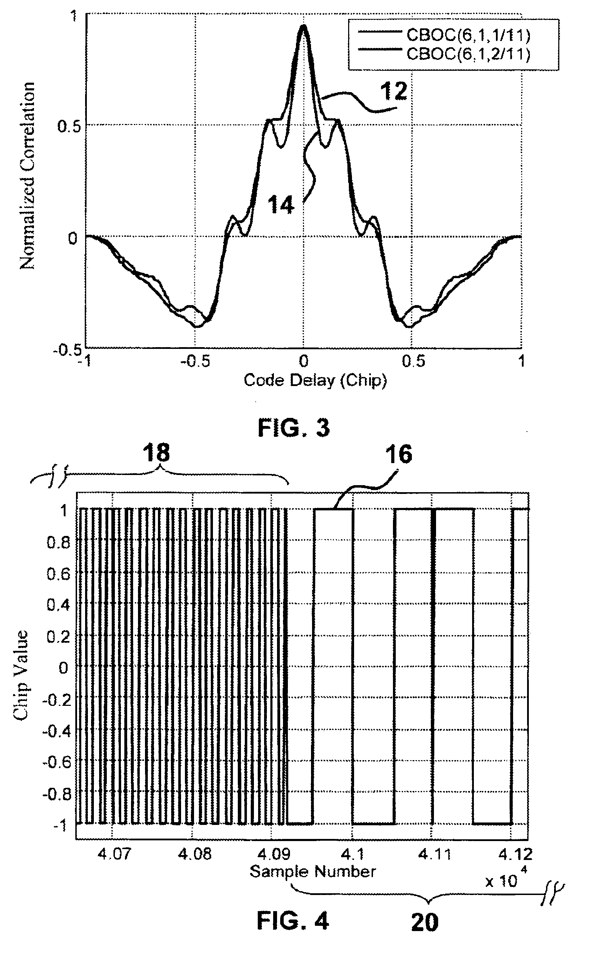

Des autocorrélations **12, 14** de deux formes d'onde CBOC sont montrées à la figure 3. Assumant que les voies de données et pilote portent chacune 50% de la puissance du signal, les indices 1/11 et 2/11 indiquent le schéma de multiplexage utilisé pour le signal de radionavigation et font référence à une certaine pondération des composantes BOC(1,1) et BOC(6,1). Pour CBOC(6,1,1/11), on a V=0,383998 et W=0,121431 ; pour CBOC(6,1,2/11), on a V=0,358235 et W=0,168874. Le numéro de référence **12** marque la fonction d'autocorrélation dans le cas du CBOC(6,1,1/11) et le numéro de référence **14** marque la fonction d'autocorrélation dans le cas du CBOC(6,1,2/11).

L'inconvénient de la méthode décrite ci-dessus est le nombre de corrélateurs nécessaires pour sa mise en oeuvre. La présente invention propose, pour recevoir la forme d'onde CBOC(6,1) **10** définie ci-dessus, d'effectuer la corrélation du signal entrant avec un signal local multiplexé dans le temps **16** qui comprend un segment ou des segments de pur BOC(1,1) et un segment ou des segments de pur BOC(6,1). La figure 4 montre une représentation temporelle d'une forme d'onde locale $s_{LOC}(t)$, qui présente un segment de forme d'onde BOC(6,1) **18** au début de l'intervalle d'intégration et un segment de forme d'onde BOC(1,1) **20** à la fin de l'intervalle d'intégration. La forme d'onde locale **16** n'a que deux valeurs (forme d'onde binaire) et peut donc être codée sur un bit. La forme d'onde locale **16** porte la partie connue du code pseudo-aléatoire modulant le signal CBOC(6,1). On peut reconnaître des transitions de la valeur du code pseudo-aléatoire aux abscisses 4,07 et 4,11 de la figure 4. On notera que la forme d'onde locale **16** se distingue nettement de la forme d'onde composite modulant le signal de radionavigation **10** entrant.

Notons T la durée de l'intervalle d'intégration, $\alpha T$ la durée totale du ou des segments **18** de pur BOC(6,1), avec $0<\alpha<1$, et $\beta T$ la durée totale du ou des segments **20** de pur BOC(1,1), avec $\beta=1-\alpha$. Pour analyser le résultat d'une corrélation entre le signal de radionavigation modulé par la forme d'onde CBOC(6,1) 10 et la forme d'onde binaire locale **16,** nous pouvons décomposer la corrélation :

$$\int_0^T s_{LOC}(t-\hat{\tau})CBOC(t-\tau)dt = \int_0^{\alpha T} s_{LOC}(t-\hat{\tau})CBOC(t-\tau)dt + \int_{\alpha T}^T s_{LOC}(t-\hat{\tau})CBOC(t-\tau)dt$$

En reprenant ce que nous avons vu dans l'exemple précédent, et en supposant que les séquences du code pseudo-aléatoire correspondant aux intervalles $[0, \alpha T]$ et $[\alpha T, T]$ s'approchent elles-mêmes de codes pseudo-aléatoires, nous pouvons faire l'approximation suivante :

$$I_{BOC(6,1)} = \alpha\left( VR_{BOC(1,1)/BOC(6,1)}(\varepsilon_\tau) - WR_{BOC(6,1)}(\varepsilon_\tau) \right)\cos(\varepsilon_\phi),$$

$$Q_{BOC(6,1)} = \alpha\left( VR_{BOC(1,1)/BOC(6,1)}(\varepsilon_\tau) - WR_{BOC(6,1)}(\varepsilon_\tau) \right)\sin(\varepsilon_\phi),$$

$$I_{BOC(1,1)} = \beta\left( VR_{BOC(1,1)}(\varepsilon_\tau) - WR_{BOC(1,1)/BOC(6,1)}(\varepsilon_\tau) \right)\cos(\varepsilon_\phi)$$

et

$$Q_{BOC(1,1)} = \beta \left( VR_{BOC(1,1)}(\varepsilon_\tau) - WR_{BOC(1,1)/BOC(6,1)}(\varepsilon_\tau) \right) \sin(\varepsilon_\phi) \, .$$

La corrélation devient donc :

$$I = I_{BOC(1,1)} - I_{BOC(6,1)}$$
$$= \left( \beta VR_{BOC(1,1)}(\varepsilon_\tau) - (\beta W + \alpha V) R_{BOC(1,1)/BOC(6,1)}(\varepsilon_\tau) + \alpha WR_{BOC(6,1)}(\varepsilon_\tau) \right) \cos(\varepsilon_\phi)$$

$$Q = Q_{BOC(1,1)} - Q_{BOC(6,1)}$$
$$= \left( \beta VR_{BOC(1,1)}(\varepsilon_\tau) - (\beta W + \alpha V) R_{BOC(1,1)/BOC(6,1)}(\varepsilon_\tau) + \alpha WR_{BOC(6,1)}(\varepsilon_\tau) \right) \sin(\varepsilon_\phi)$$

On voit que pour retrouver, à un facteur multiplicatif près, la même contribution relative des fonctions d'autocorrélations des formes d'ondes BOC(1,1) et BOC(6,1) que dans la fonction d'autocorrélation **12** ou **14** du CBOC, il faut que α=W/(V+W) et β=V/(V+W).

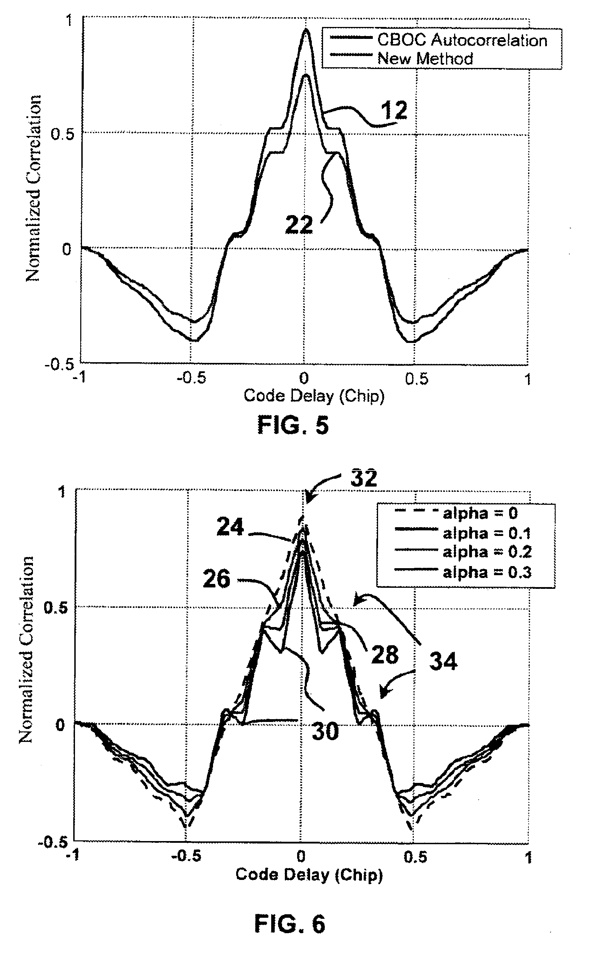

Dans le cas du schéma CBOC(6,1,1/11), on a donc de préférence α=0,2403 et β=0,7597. La figure 5 montre d'une part la fonction d'autocorrélation **12** du CBOC(6,1,1/11), déjà illustrée dans la figure 2, et d'autre part la fonction de corrélation **22** entre le CBOC(6,1,1/11) et la forme d'onde binaire locale **16** avec α=0,2403 et β=0,7597. En ce qui concerne l'aspect de la forme d'onde binaire locale **16,** cela signifie que sur 4096 bribes du code pseudo-aléatoire, approximativement 984 forment le ou les segments de forme d'onde BOC(6,1) et 3112 forment le ou les segments de forme d'onde BOC(1,1).

Dans le cas du CBOC(6,1,2/11), α=W/(V+W) mène à α=0,3204 et β=0,6796. Dans ce cas, sur 4096 bribes du code pseudo-aléatoire, approximativement 1312 forment le ou les segments de forme d'onde BOC(6,1) et 2784 forment le ou les segments de forme d'onde BOC(1,1).

La figure 6 montre une famille de fonctions de corrélation **24, 26, 28** et **30** entre un signal de radionavigation modulé en schéma CBOC(6,1,2/11) **10** et une forme d'onde locale binaire multiplexée dans le temps **16** obtenues pour différentes valeurs du paramètre α. On peut voir que la valeur de α permet de jouer sur la forme de la fonction de corrélation. Pour α=0, on obtient la courbe **24,** pour α=0,1 la courbe **26,** pour α=0,2 la courbe **28** et pour α=0,3 la courbe **30.** Suivant la valeur de α, les pics central **32** et secondaires **34** sont plus ou moins prononcés.

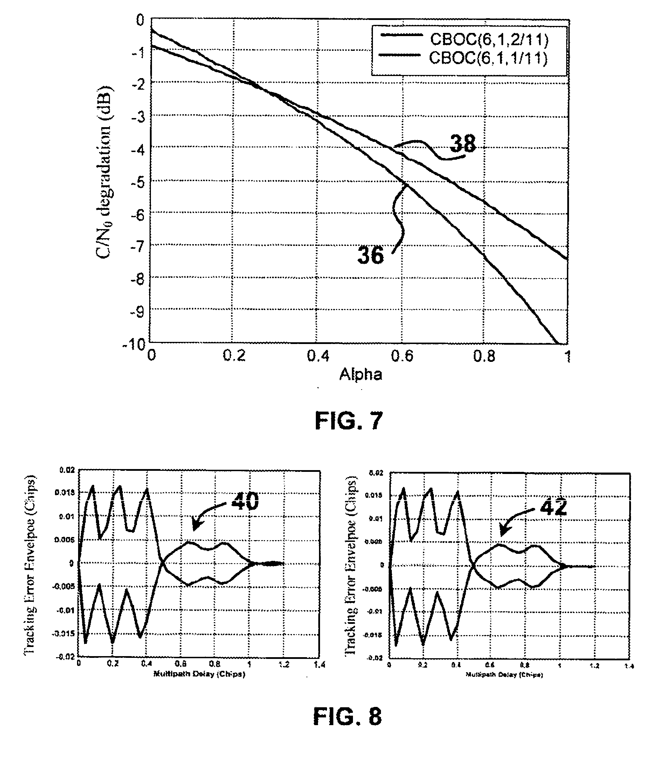

La figure 7 montre la dégradation du rapport C/N$_0$, c.-à-d. du rapport signal reçu sur la densité spectrale du bruit. La dégradation du C/N$_0$ peut être calculée par :

$$\deg_{C/N_0} = \frac{Peak\_Corr^2}{Peak\_Autocorr^2} = \frac{(\beta V + \alpha W)^2}{(V^2 + W^2)^2} \, ,$$

car $R_{BOC(1,1)/BOC(6,1)}$ est symétrique et vaut 0 en 0. Alternativement, on peut écrire:

$$\deg_{C/N_0} = \frac{(V + \alpha(W - V))^2}{(V^2 + W^2)^2} \, .$$

La dégradation du C/N$_0$ est représentée dans la figure 7 pour les cas du CBOC(6,1,1/11) (courbe **36**) et du CBOC(6,1,2/11) (courbe **38**). On voit que pour le cas α=0, qui correspond au cas où la forme d'onde locale est un pur BOC(1,1), on a bien la dégradation associée à partie de la puissance du signal allouée au BOC(6,1) (1/11 et 2/11 respectivement). Dans le cas du CBOC(6,1,1/11), avec $\alpha$=0,2403, on a une dégradation du rapport C/N$_0$ de 1.97dBs. Dans le cas du CBOC(6,1,2/11), avec $\alpha$=0,3204, on a une dégradation du rapport C/N$_0$ de 2,56 dBs.

Pour l'exemple du CBOC(6,1,1/11), la figure 8 représente, à gauche, l'enveloppe d'erreurs multi-trajet **40** dans le cas où la forme d'onde locale est une forme d'onde composite CBOC(6,1) correspondante et, à droite, l'enveloppe d'erreurs multi-trajet **42** dans le cas où la forme d'onde locale est une forme d'onde binaire multiplexée dans le temps avec $\alpha$=0,2403. On remarque que les l'enveloppes d'erreurs multi-trajet **40, 42** sont essentiellement identiques.

Il reste à noter que l'obtention d'une fonction de corrélation similaire, à un facteur de proportionnalité près, à la fonction d'autocorrélation du CBOC n'est pas le seul critère d'optimisation de la valeur de $\alpha$. En effet, on peut également choisir la forme d'onde binaire locale en fonction notamment des critères : (a) minimisation de la dégradation du rapport C/N$_0$, (b) minimisation de l'erreur de poursuite dû a un bruit blanc Gaussien, (c) optimisation de la forme de la fonction de corrélation entre le signal entrant et la forme d'onde locale et (d) réduction des erreurs multi-trajet. On dispose donc d'une certaine liberté pour choisir la valeur de $\alpha$.

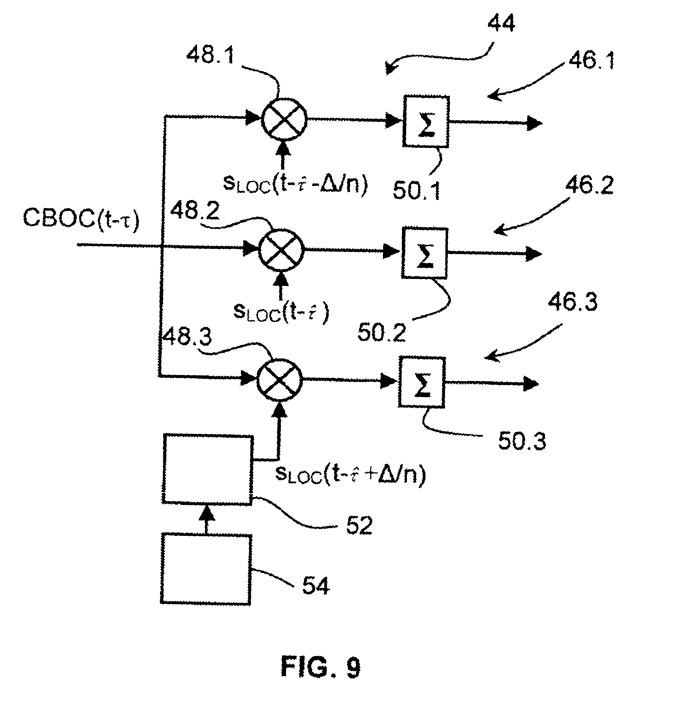

La figure 9 montre le schéma simplifié du canal de réception d'un récepteur **44** adapté à la réception d'un signal composite, par exemple un signal CBOC. On suppose les signaux traités en bande de base, sans considérer les porteuses locales pour cette illustration. Le récepteur 44 comprend un ensemble **46** de corrélateurs, représentés à titre d'exemple au nombre de trois. Ces corrélateurs **46.1, 46.2, 46.3** peuvent être aussi au nombre de deux, voir un par canal, mais aussi plus nombreux, pour réduire le temps d'acquisition et/ou l'erreur due aux multi-trajets, par exemple. Chaque corrélateur comprend un mélangeur **48.1, 48.2,** resp. **48.3,** mélangeant le signal entrant CBOC avec une copie de la forme d'onde binaire locale s$_{LOC}$, et un intégrateur **50.1, 50.2,** resp. **50.3** effectuant l'intégration des signaux mélangés et produisant un signal de sortie. Il est à noter que pour recevoir plusieurs signaux émis par les satellites, un récepteur a besoin d'une pluralité de voies de réception (canaux). Pour chaque voie de réception du récepteur, il y a un tel ensemble de corrélateurs dont les signaux de sortie sont combinés pour former, en mode d'acquisition du signal, l'estimation d'énergie du signal reçu et, en mode poursuite du signal, le discriminateur du code pseudo-aléatoire.

Le premier corrélateur **46.1,** dit « en avance », fournit la valeur de la corrélation du signal entrant CBOc(t-$\tau$) et d'une copie « en avance » de la forme d'onde binaire locale s$_{LOC}$(t-$\hat{\tau}$ -$\Delta$n). Il est rappelé que $\tau$ est la phase du code pseudo-aléatoire du signal reçu et $\hat{\tau}$ une estimée de $\tau$. $\Delta$ est la durée d'une bribe et n détermine la fraction de durée de bribe que la copie de la forme d'onde locale binaire est en avance par rapport à l'estimée $\hat{\tau}$. Le deuxième corrélateur **46.2** dit « en phase » fournit la valeur de la corrélation du signal entrant CBOC(t-$\tau$) et d'une copie « en phase » de la forme d'onde binaire locale s$_{LOC}$(t-$\hat{\tau}$). Le troisième corrélateur **46.3,** dit « en retard », fournit la valeur de la corrélation du signal entrant CBOC(t-$\tau$) et d'une copie « en retard » de la forme d'onde binaire locale s$_{LOC}$(t-$\hat{\tau}$ +$\Delta$/n).

Pour produire les signaux s$_{LOC}$(t-$\hat{\tau}$-$\Delta$/n), s$_{LOC}$(t-$\hat{\tau}$) et s$_{LOC}$(t-$\hat{\tau}$ +$\Delta$/n), le récepteur **44** comprend un ensemble de générateurs. Pour des raisons de clarté, seul le générateur **52** fournissant la copie s$_{LOC}$(t-$\hat{\tau}$ +$\Delta$/n) de la forme d'onde locale est représenté. Le générateur **52** est commandé par une unité de commande **54.** Le générateur **52** peut comprendre, par exemple, un oscillateur contrôlé numériquement (OCN). Dans ce cas, l'OCN reçoit comme entrée une fréquence d'oscillation de consigne correspondant au rythme de bribes corrigé pour l'effet Doppler ainsi qu'une valeur binaire qui détermine si l'OCN sort une forme d'onde BOC(n$_2$,m) ou BOC(n$_1$,m). La valeur binaire est donnée par l'unité de contrôle en fonction du mode de fonctionnement du récepteur, c.-à-d. selon que le récepteur est en mode acquisition, en mode poursuite, ou selon qu'il reçoit un signal CBOC ou un signal TMBOC. L'unité de commande détermine notamment l'ordre temporel du ou des segments BOC(n$_1$,m) et du ou des segments BOC(n$_2$,m) ainsi que la durée du ou des segments BOC(n$_1$,m) et du ou des segments BOC(n$_2$,m).

**Revendications**

**1.** Procédé de réception d'un signal de radionavigation modulé par une forme d'onde composite, la forme d'onde composite comprenant une combinaison linéaire à coefficients réels d'une composante BOC(n$_1$,m) et d'une composante BOC(n$_2$,m), n$_1$ étant distinct de n$_2$;

dans lequel on opère une corrélation entre une forme d'onde locale et ladite forme d'onde composite sur un intervalle de temps de durée T,

**caractérisé en ce que** la forme d'onde locale est une forme d'onde binaire, formée sur ledit intervalle de temps d'une succession alternante comprenant au moins un segment de forme d'onde BOC(n$_1$,m) et au moins un segment de forme d'onde BOC(n$_2$,m), l'au moins un segment BOC(n$_1$,m) ayant une durée totale de $\alpha$ T, $\alpha$ étant strictement compris entre 0 et 1, l'au moins un segment BOC(n$_2$,m) ayant une durée totale (1-$\alpha$)T.

**2.** Procédé selon la revendication 1, dans lequel les composantes BOC(n$_1$,m) et BOC(n$_2$,m) portent un même code pseudo-aléatoire et dans lequel la forme d'onde locale porte au moins une partie prédéterminée de ce code pseudo-aléatoire.

3. Procédé selon la revendication 1 ou 2, dans lequel $n_2$=1 et m=1, la combinaison linéaire étant donc une forme d'onde CBOC($n_1$,1) définie par :

$$CBOC(n_1,1) = V \cdot BOC(1,1) + W \cdot BOC(n_1,1),$$

où V et W sont des coefficients réels de pondération.

4. Procédé selon l'une quelconque des revendications 1 à 3, dans lequel $n_1$=6.

5. Procédé selon la revendication 3 ou 4, dans lequel $\alpha$ est au moins approximativement égal à W/(V+W).

6. Procédé selon l'une quelconque des revendications 1 à 5, dans lequel ladite forme d'onde locale est formée sur ledit intervalle de temps d'une succession alternante comprenant une pluralité de segments de forme d'onde BOC($n_1$,m) d'une durée totale $\alpha$T et/ou une pluralité de segments de forme d'onde BOC($n_2$,m) d'une durée totale (1-$\alpha$)T.

7. Récepteur adapté pour recevoir un signal de radionavigation modulé par une forme d'onde composite, la forme d'onde composite comprenant une combinaison linéaire à coefficients réels d'une composante BOC($n_1$,m) et d'une composante BOC($n_2$,m), $n_1$ étant distinct de $n_2$,
   le récepteur comprenant un ensemble de générateurs de forme d'onde locale et de corrélateurs pour opérer la corrélation entre la forme d'onde locale et ladite forme d'onde composite sur un intervalle de temps de durée T,
   le récepteur étant **caractérisé en ce que** les générateurs de forme d'onde locale sont configurés pour générer une forme d'onde locale binaire, formée sur ledit intervalle de temps d'une succession alternante comprenant au moins un segment de forme d'onde BOC($n_1$,m) et au moins un segment de forme d'onde BOC($n_2$,m), l'au moins un segment BOC($n_1$,m) ayant une durée totale de $\alpha$T, $\alpha$ étant strictement compris entre 0 et 1, l'au moins un segment BOC($n_2$,m) ayant une durée totale (1-$\alpha$)T.

8. Récepteur selon la revendication 7, **caractérisé en ce qu'**il comprend une unité de commande agissant sur les générateurs de forme d'onde locale de manière à influencer
   un ordre temporel du ou des segments BOC($n_1$,m) et du ou des segments BOC($n_2$,m),
   et/ou la durée du ou des segments BOC($n_1$,m) et du ou des segments BOC($n_2$,m).

9. Récepteur selon la revendication 7 ou 8, dans lequel $n_1$=6, $n_2$=1 et m=1.

10. Utilisation d'un récepteur selon l'une quelconque des revendications 7 à 9 pour recevoir un signal de radionavigation modulé par une forme d'onde composite, la forme d'onde composite comprenant une combinaison linéaire à coefficients réels d'une composante BOC($n_1$,m) et d'une composante BOC($n_2$,m), $n_1$ étant distinct de $n_2$.

**Claims**

1. A method for receiving a radionavigation signal modulated by a composite waveform, the composite waveform comprising a linear combination with real-valued coefficients of a BOC($n_1$,m) component and a BOC($n_2$,m) component, $n_1$ differing from $n_2$;
   in which a correlation is performed between a local waveform and said composite waveform over a time interval of duration T,
   **characterised in that** the local waveform is a binary waveform, formed over said time interval by an alternating succession comprising at least one BOC($n_1$,m) waveform segment and at least one BOC($n_2$,m) waveform segment, the at least one BOC($n_1$,m) segment having a total duration of $\alpha$T, $\alpha$ being strictly between 0 and 1, the at least one BOC($n_2$,m) segment having a total duration of (1-$\alpha$)T.

2. A method according to claim 1, in which the BOC($n_1$,m) and BOC($n_2$,m) components carry an identical pseudo-random code and in which the local waveform carries at least one predetermined part of this pseudo-random code.

3. A method according to claim 1 or claim 2, in which $n_2$=1 and m=1, the linear combination thus being a CBOC($n_1$, 1) waveform defined by:

$$CBOC(n_1,1) = V \cdot BOC(1,1) + W \cdot BOC(n_1,1),$$

where V and W are real-valued weighting coefficients.

**4.** A method according to any one of claims 1 to 3, in which $n_1=6$.

**5.** A method according to claim 3 or claim 4, in which $\alpha$ is at least approximately equal to W/(V+W)

**6.** A method according to any one of claims 1 to 5, in which said local waveform is formed over said time interval of an alternating succession comprising a plurality of BOC($n_1$,m) waveform segments of a total duration $\alpha$T and/or a plurality of BOC($n_2$,m) waveform segments of a total duration (1-$\alpha$)T.

**7.** A receiver capable of receiving a radionavigation signal modulated by a composite waveform, the composite waveform comprising a linear combination with real-valued coefficients of a BOC($n_1$,m) component and a BOC($n_2$,m) component, $n_1$ differing from $n_2$,
the receiver comprising a set of local waveform generators and correlators for performing the correlation between the local waveform and said composite waveform over a time interval of duration T,
the receiver being **characterised in that** the local waveform generators are configured to generate a local binary waveform, formed over said time interval of an alternating succession comprising at least one BOC($n_1$,m) waveform segment and at least one BOC($n_2$,m) waveform segment, the at least one BOC($n_1$,m) segment having a total duration of $\alpha$T, $\alpha$ being strictly between 0 and 1, the at least one BOC($n_2$,m) segment having a total duration of (1-$\alpha$)T.

**8.** A receiver according to claim 7, **characterised in that** it comprises a control unit acting on the local waveform generators so as to influence a temporal order of the BOC($n_1$,m) segment(s) and the BOC($n_2$,m) segment(s), and/or the duration of the BOC($n_1$,m) segment(s) and of the BOC($n_2$,m) segment(s)

**9.** A receiver according to claim 7 or claim 8, in which $n_1=6$, $n_2=1$ and m=1

**10.** Use of a receiver according to any one of claims 7 to 9 for receiving a radionavigation signal modulated by a composite waveform, the composite waveform comprising a linear combination with real coefficients of a BOC($n_1$, m) component and a BOC($n_2$,m) component, $n_1$ differing from $n_2$.

**Patentansprüche**

**1.** Verfahren zum Empfangen eines durch eine zusammengesetzte Wellenform modulierten Funknavigationssignals, wobei die zusammengesetzte Wellenform eine Linearkombination mit reellen Koeffizienten aus einer BOC($n_1$, m)-Komponente und einer BOC(n2,m)-Komponente aufweist, worin $n_1$ verschieden ist von $n_2$ ,
bei dem in einem Zeitintervall der Dauer T eine Korrelation zwischen einer lokalen Wellenform und der zusammengesetzten Wellenform durchgeführt wird,
**dadurch gekennzeichnet, dass** die lokale Wellenform eine binäre Wellenform ist, die im genannten Zeitintervall von einer Wechselfolge gebildet ist, die mindestens ein BOC($n_1$,m)-Wellenformsegment und mindestens ein BOC($n_2$,m)-Wellenformsegment umfasst, wobei das mindestens eine BOC($n_1$,m)-Segment eine Gesamtdauer $\alpha$T hat, worin $\alpha$ strikt zwischen 0 und 1 liegt, und das mindestens eine BOC($n_2$,m)-Segment eine Gesamtdauer (1-$\alpha$)T hat.

**2.** Verfahren nach Anspruch 1, bei dem die BOC($n_1$,m)- und BOC($n_2$,m)-Komponenten denselben pseudozufälligen Code tragen und die lokale Wellenform mindestens einen vorbestimmten Teil dieses pseudozufälligen Code trägt

**3.** Verfahren nach Anspruch 1 oder 2, bei dem $n_2=1$ und m=1, wobei die Linearkombination folglich eine CBOC($n_1$, 1)-Wellenform ist, definiert durch:

$$CBOC(n_1,1) = V \cdot BOC(1,1) + W \cdot BOC(n_1,1),$$

worin V und W reelle Wichtungskoeffizienten sind

**4.** Verfahren nach irgendeinem der Ansprüche 1 bis 3, bei dem $n_1=6$.

**5.** Verfahren nach Anspruch 3 oder 4, bei dem $\alpha$ mindestens näherungsweise gleich W/(V+W) ist

**6.** Verfahren nach irgendeinem der Ansprüche 1 bis 5, bei dem die lokale Wellenform im genannten Zeitintervall von einer Wechselfolge gebildet ist, die eine Vielzahl von $BOC(n_1,m)$-Wellenformsegmenten mit einer Gesamtdauer $\alpha T$ und/oder eine Vielzahl von $BOC(n_2,m)$-Wellenformsegmenten mit einer Gesamtdauer $(1-\alpha)T$ umfasst

**7.** Empfänger zum Empfangen eines durch eine zusammengesetzte Wellenform modulierten Funknavigationssignals, wobei die zusammengesetzte Wellenform eine Linearkombination mit reellen Koeffizienten aus einer $BOC(n_1, m)$-Komponente und einer $BOC(n_2,m)$-Komponente aufweist, worin $n_1$ verschieden ist von $n_2$, wobei der Empfänger einen Satz von Generatoren einer lokalen Wellenform und Korrelatoren aufweist, um in einem Zeitintervall der Dauer T die Korrelation zwischen der lokalen Wellenform und der zusammengesetzten Wellenform durchzuführen, wobei der Empfänger **dadurch gekennzeichnet ist, dass** die Generatoren der lokalen Wellenform zum Erzeugen einer binären lokalen Wellenform ausgestaltet sind, die im genannten Zeitintervall von einer Wechselfolge gebildet ist, die mindestens ein $BOC(n_1,m)$-Wellenformsegment und mindestens ein $BOC(n_2,m)$-Wellenformsegment umfasst, wobei das mindestens eine $BOC(n_1,m)$-Segment eine Gesamtdauer $\alpha T$ hat, worin $\alpha$ strikt zwischen 0 und 1 liegt, und das mindestens eine $BOC(n_2,m)$-Segment eine Gesamtdauer $(1-\alpha)T$ hat

**8.** Empfänger nach Anspruch 7, **dadurch gekennzeichnet, dass** er eine auf die Generatoren der lokalen Wellenform einwirkende Steuereinheit aufweist, zur Beeinflussung einer zeitlichen Abfolge des oder der $BOC(n_1,m)$-Segmente und des oder der $BOC(n_2,m)$-Segmente, und/oder der Dauer des oder der $BOC(n_1,m)$-Segmente und des oder der $BOC(n_2,m)$-Segmente.

**9.** Empfänger nach Anspruch 7 oder 8, bei dem $n_1$-6, $n_2=1$ und $m=1$.

**10.** Verwendung eines Empfängers nach irgendeinem der Ansprüche 7 bis 9 zum Empfangen eines durch eine zusammengesetzte Wellenform modulierten Funknavigationssignals, wobei die zusammengesetzte Wellenform eine Linearkombination mit reellen Koeffizienten aus einer $BOC(n_1,m)$-Komponente und einer $BOC(n_2,m)$-Komponente aufweist, worin $n_1$ verschieden ist von $n_2$.

**FIG. 1**

**FIG. 2**

**FIG. 3**

**FIG. 4**

**FIG. 5**

**FIG. 6**

**FIG. 7**

**FIG. 8**

FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 05290083 A

**Littérature non-brevet citée dans la description**

- **Hein et al.** *MBOC : The New Optimized Spreading Modulation Recommended for GALILEO L1 OS and GPS L1C,* Mai 2006, 57-65